**Europäisches Patentamt**

**European Patent Office**

**Office européen des brevets**

(19)

(11) Veröffentlichungsnummer : **0 262 380 B1**

(12) # EUROPÄISCHE PATENTSCHRIFT

(45) Veröffentlichungstag der Patentschrift :
**05.06.91 Patentblatt 91/23**

(51) Int. Cl.$^5$ : **C08F 6/00**

(21) Anmeldenummer : **87112225.5**

(22) Anmeldetag : **22.08.87**

(54) Verfahren zur Herstellung eines weitgehend monomerenfreien Hydrogels.

(30) Priorität : **30.08.86 DE 3629611**
**17.10.86 DE 3635367**

(43) Veröffentlichungstag der Anmeldung :
**06.04.88 Patentblatt 88/14**

(45) Bekanntmachung des Hinweises auf die
Patenterteilung :
**05.06.91 Patentblatt 91/23**

(84) Benannte Vertragsstaaten :
**CH DE FR GB LI**

(56) Entgegenhaltungen :
**DE-C- 3 316 597**
**DATABASE WPIL, Nr. 78-06920A (04), Derwent**
**Publications**

(73) Patentinhaber : **CASSELLA Aktiengesellschaft**
**Hanauer Landstrasse 526**
**W-6000 Frankfurt am Main 61 (DE)**

(72) Erfinder : **Engelhardt, Friedrich, Dr.**
**Hünfelder Strasse 20**
**W-6000 Frankfurt 61 (DE)**
Erfinder : **Schrod, Manfred, Dr.**
**Gross-Gerauer Strasse 54**
**W-6108 Weiterstadt (DE)**
Erfinder : **Ziegelmayer, Manfred**
**Treburer Strasse 31**
**W-6094 Bischofsheim (DE)**
Erfinder : **Hilbig, Josef, Dr.**
**Seifer Weg 3a**
**W-6204 Taunusstein (DE)**
Erfinder : **Dönges, Reinhard, Dr.**
**Kelkheimer Strasse 115a**
**W-6232 Bad Soden (DE)**

(74) Vertreter : **Urbach, Hans-Georg, Dr. et al**
**Hanauer Landstrasse 526**
**W-6000 Frankfurt am Main 61 (DE)**

EP 0 262 380 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines weitgehend monomeren- und oligomerenfreien Hydrogels.

Hydrogele sind wasserhaltige gelförmige Polymerisate bzw. Copolymerisate, z.B. auf der Basis von Polyacrylsäure, die z.B. zunehmend, zumeist in getrockneter Form, als sogenannte Superabsorbenzien zum Aufsaugen von Flüssigkeiten verwendet werden. Derartige Superabsorbenzien finden beispielsweise Anwendung in Windeleinlagen und dergleichen zum Auffangen von Körperflüssigkeiten. Dabei sollten die Superabsorbenzien möglichst frei sein von Monomeren und Oligomeren. Die Herstellung monomeren- bzw. oligomerenfreier Hydrogele ist durch eine besondere Führung bei der Polymerisation bzw. Copolymerisation allein normalerweise nicht zu erreichen.

Database WPIL, Nr 78-06920A (04), Derwent Publications, betrifft die Entfernung von nichtreagiertem Acrylamid aus Acrylamidpolymeren oder Copolymeren durch Extraktion mit wässrigen Methanol enthaltenden Lösungen.

Es wurde nun überraschenderweise gefunden, daß die Herstellung eines weitgehend monomeren- und oligomerenfreien Hydrogels auf der Basis von Polyacrylsäure dadurch möglich ist, daß das Hydrogel mit einem einphasigen Gemisch aus Wasser und Isopropanol in Kontakt gebracht und dabei das Gewichtsverhältnis von Wasser zu Isopropanol im Bereich (40 bis 65) : (60 bis 35) so gewählt wird, daß das Hydrogel weder schrumpft noch quillt und danach das Gemisch aus Wasser und Isopropanol von dem Hydrogel abgetrennt wird. Nach dem Abtrennen des Gemisches aus Wasser und Isopropanol von dem Hydrogel wird das Hydrogel normalerweise getrocknet oder gedämpft bzw. gedämpft und getrocknet.

Das zur Anwendung kommende Gewichtsverhältnis zwischen Wasser und Isopropanol hängt dabei von den Eigenschaften des jeweiligen Hydrogels ab, die insbesondere von seiner chemischen Zusammensetzung, seinem Polymerisations- bzw. Copolymerisations- und seinem Vernetzungsgrad beeinflußt werden.

Das bei dem erfindungsgemäßen Verfahren zum Einsatz kommende Hydrogel wird nach der Polymerisation bzw. Copolymerisation normalerweise zerkleinert, z.B. auf eine Partikelgröße von 0,5 bis 15 mm, vorzugsweise 1 bis 10 mm. Diese Zerkleinerung wird in an sich bekannter Weise, z.B. auf einem Wolf oder Kneter vorgenommen. Nach der Zerkleinerung wird das Hydrogel mit dem einphasigen Gemisch aus Wasser und Isopropanol in Kontakt gebracht. Dies kann auf verschiedene, an sich bekannte kontinuierliche oder diskontinuierliche Weise geschehen. Beispielsweise kann das Hydrogel in einem geeigneten Behälter mit dem einphasigen Gemisch aus Wasser und Isopropanol durch Rühren in Kontakt gebracht und danach von dem Hydrogel in geeigneter Weise, z.B. auf einem Filter, wie z.B. einem Bandfilter oder einer Filternutsche, in einem Dekanter oder Zentrifuge oder in einem Mixer-Settler abgetrennt werden. Für das Inkontaktbringen und die anschließende Abtrennung sind jedoch auch andere bekannte ein- oder mehrstufige Wasch- oder Extraktionsverfahren geeignet, insbesondere solche, die nach dem Gegenstromprinzip arbeiten.

Das zerkleinerte Hydrogel bleibt bei der erfindungsgemäßen Arbeitsweise rührbar und kann leicht von der flüssigen Phase abgetrennt werden.

Das Inkontaktbringen kann bei Normaltemperatur, vorzugsweise jedoch bei leicht erhöhter Temperatur, z.B. bis etwa 50°C erfolgen und wird üblicherweise unter Normaldruck durchgeführt. Bei der Abtrennung kann es je nach der benutzten Vorrichtung zweckmäßig oder erforderlich sein, verminderten oder erhöhten Druck anzuwenden.

Die für das Inkontaktbringen benötigte Menge des einphasigen Gemisches aus Wasser und Isopropanol wird zweckmäßigerweise so klein wie möglich gehalten und kann leicht durch Vorversuche ermittelt werden. In vielen Fällen beträgt das Gewichtsverhältnis Hydrogel : (Gemisch aus Wasser und Isopropanol) = 1 : (0,5 bis 10), vorzugsweise 1 : (0,5 bis 5), ganz besonders bevorzugt 1 : (1 bis 3).

Das erfindungsgemäße Inkontaktbringen des Hydrogels mit dem einphasigen Gemisch aus Wasser und Isopropanol kann gegebenenfalls mehrfach wiederholt werden, bis der gewünschte niedere Gehalt an Monomeren oder Oligomeren im Hydrogel erreicht ist, was leicht durch analytische Untersuchungen festgestellt werden kann.

Nach dem Inkontaktbringen des Hydrogels mit dem einphasigen Gemisch aus Wasser und Isopropanol unter der erfindungsgemäßen Bedingung, daß dabei das Hydrogel weder quillt noch schrumpft, läßt sich das Hydrogel leicht von dem Gemisch aus Wasser und Isopropanol abtrennen, ohne daß Zusammenbackungen oder ein Verkleben der Filtertücher oder ähnliches eintritt.

Nach der endgültigen Abtrennung des Gemisches aus Wasser und Isopropanol kann das auf die erfindungsgemäße Weise gereinigte Hydrogel in an sich bekannter Weise z.B. auf üblichen Trocken- und-/oder Dämpfaggregaten getrocknet oder gedämpft bzw. gedämpft und getrocknet, und auf übliche Weise weiterverarbeitet, z.B. weiter zerkleinert, werden.

Bei dem Dämpfprozeß wird das noch isopropanolhaltige Hydrogel mit Dampf beaufschlagt, wodurch das Isopropanol vollständig verdampft und unter vermindertem Druck abgezogen werden kann. Dies ist für die üblicherweise sich anschließende Trocknung von Vorteil, da man dann eine Wassertrocknung anstelle einer Isopropanoltrocknung durchführen kann.

Die als Ausgangsprodukte benötigten Hydrogele können in an sich bekannter Weise durch Polymerisation bzw. Copolymerisation hergestellt werden, insbesondere nach dem Verfahren der Gelpolymerisation oder Perlpolymerisation. Dabei werden wässrige Lösungen monomerer Acrylsäure bzw. Methacrylsäure und/oder deren Alkali-, Ammonium- oder Aminsalze und gegebenenfalls anderer, wasserlöslicher polymerisierbarer Monomerer, wie z.B. Acrylamid, N-Vinylpyrrolidon, etc, normalerweise unter Zusatz einer mehrfach olefinisch ungesättigte Verbindung als Vernetzer polymerisiert bzw. copolymerisiert. Die Polymerisation wird dabei auf übliche Weise, z.B. durch Einwirkung energiereicher Strahlung oder Zusatz radikalbildender Initiatoren ausgelöst. Auf derartige Weise werden Hydrogele erhalten, die zwischen 45 und 80 Gew% Wasser enthalten und die nach Zerkleinerung bei dem erfindungsgemäßen Verfahren verwendet werden können.

Die bei dem erfindungsgemäßen Verfahren eingesetzten Hydrogele enthalten normalerweise 0,1 bis 10 Gew% ( = 1000 bis 100.000 ppm) Monomere. Je nach vorliegendem Hydrogel und dem benutzten Gemisch aus Wasser und Isopropanol lassen sich bereits bei einstufiger Anwendung des erfindungsgemäßen Verfahrens bei den Monomeren Auswaschgrade von 50 bis über 90% erzielen. Diese Auswaschgrade lassen sich bei einer mehrfachen Anwendung des erfindungsgemäßen Verfahrens bzw. einer mehrstufigen Arbeitsweise erheblich verbessern. Dabei kann eine mehrfache bzw. mehrstufige Anwendung des erfindungsgemäßen Verfahrens z.B. in einfacher Weise auch dadurch erfolgen, daß das Hydrogel auf einem Filter oder einer Nutsche ein- oder mehrmals mit dem Gemisch aus Wasser und Isopropanol gewaschen wird.

Der in einer Behandlungsstufe erzielbare Auswaschgrad hängt von der chemischen Zusammensetzung des Hydrogels, seinem Restgehalt an Monomeren und Oligomeren und dem benutzten Gemisch aus Wasser und Isopropanol ab.

Durch eine mehrfache Anwendung bzw. eine mehrstufige Arbeitsweise ist es möglich, den Gehalt an Monomeren auf Werte unter 200 ppm, in vielen Fällen auf Werte unterhalb der Nachweisgrenze zu erniedrigen. Gleichzeitig werden Oligomere und nichtvernetzte Polyacrylsäuren und Salze weitgehend ausgewaschen.

Die Auswaschung der Monomeren und Oligomeren aus dem Hydrogel erfolgt bei dem erfindungsgemäßen Verfahren rasch. Der in einer Behandlungsstufe bei Normaltemperatur erzielbare Auswaschgrad wird in vielen Fällen bereits nach 15 sec bis 30 min, vorzugsweise 30 sec bis 10 min des Inkontaktbringens des Hydrogels mit dem Gemisch aus Wasser und Isopropanol erreicht. Diese Zeit kann normalerweise durch Anwendung einer leicht erhöhten Temperatur bei dem Inkontaktbringen zwischen Hydrogel und dem Gemisch aus Wasser und Isopropanol abgekürzt werden

Die Herstellung geeigneter Ausgangshydrogele ist beispielsweise beschrieben in der DE-A1 34 32 690.

Die nachfolgenden Beispiele 1 bis 4 betreffen die Herstellung von Hydrogelen, die als Ausgangsprodukte für das erfindungsgemäße Verfahren geeignet sind. Die Beispiele 5 bis 15 betreffen die Durchführung des erfindungsgemäßen Verfahrens. Beispiel 16 ist ein Vergleichsbeispiel.

## Beispiel 1

In einem mit Polyethylen ausgekleideten Reaktorgefäß werden 700 ml voll entsalztes Wasser und dann 90 g Natriumcarbonat unter Rühren gelöst. Dann werden langsam 250 g Acrylsäure zugegeben, die 1 g gelöstes Trimethylolpropantriacrylat enthält.

Nach beendeter Zugabe werden dem Reaktionsgemisch 0,5 g Dibutylaminhydrochlorid, 0,25 g Ammoniumperoxodisulfat und 0,25 g p-Toluolsulfinsäure als Natriumsalz zugesetzt.

Bei einer Ausgangstemperatur von 20°C setzt die Polymerisation im Verlauf von 30 min ein, wobei die Temperatur auf ca. 90°C ansteigt. Es entsteht eine wasserhaltige Polymerisatgallerte. Der Restmonomerengehalt des Hydrogels an Acrylsäure, bestimmt durch HPLC beträgt 8.200 ppm ( = 0,82 Gew.%).

## Beispiel 2

Bei einer Wiederholung des Beispiels 1 wird anstelle des Natriumcarbonats 69 g Natriumhydroxid, anstelle des Trimethylolpropantriacrylats 0,3 g Methylenbisacrylamid und als Katalysatorsystem 0,5 g Kaliumperoxodisulfat und 1,0 g Natriumdisulfit ($Na_2S_2O_5$) eingesetzt.

Der Restmonomerengehalt des so erhaltenen Hydrogels beträgt 9000 ppm (= 0,9 Gew.%).

## Beispiel 3

Bei einer Wiederholung des Beispiels 1 wird anstelle des Natriumcarbonats 66,6 g Kaliumcarbonat, anstelle des Trimethylolpropantriacrylats 0,2 g Bisacrylamidoessigsäure und als Katalysatorsystem 0,25 g Kaliumperoxydisulfat, 0,25 g Ammoniumperoxodisulfat und 0,1 g Ascorbinsäure eingesetzt.

## Beispiel 4

Bei einer Wiederholung des Beispiels 1 wird anstelle des Natriumcarbonats 145 g Natriumbicarbonat, anstelle des Trimethylolpropantriacrylats 0,3 g Tetrallyloxyethan und als Katalysator 0,8 g 2,2'-Azohis-(2-amidopropan)-dihydrochlorid eingesetzt.

Bei den nachfolgenden Beispielen wird der Monomerengehalt in den Mutterlaugen und in dem behandelten Hydrogel über HPLC bestimmt und daraus in Verbindung mit dem ursprünglichen Monomerengehalt der Auswaschgrad bestimmt.

## Beispiel 5

100 Gew.-Teile des Hydrogels des Beispiels 1 mit einem Restmonomerengehalt von 8.200 ppm werden auf eine Teilchengröße von ca. 1 bis 5 mm zerkleinert und in einem Rührgefäß 1 min lang bei Raumtemperatur mit 200 Gew.-Teilen einer Mischung aus Wasser und Isopropanol im Gewichtsverhältnis 50 : 50 intensiv durch Rühren vermischt. Anschließend wird auf einer Filternutsche unter vermindertem Druck filtriert. Das Hydrogel läßt sich gut filtrieren und löst sich leicht vom Filtertuch.

Das behandelte Hydrogel besitzt einen Restmonomerengehalt von 570 ppm, was einem Auswaschgrad fur die Monomeren von 93% entspricht.

## Beispiel 6

Bei einer Wiederholung des Beispiels 5 wird eine Mischung aus Wasser und Isopropanol im Gewichtsverhältnis 40 : 60 eingesetzt.

Das behandelte Hydrogel besitzt einen Restmonomerengehalt von 1.394 ppm, was einem Auswaschgrad für die Monomeren von 83% entspricht.

## Beispiel 7

Bei einer Wiederholung des Beispiels 5 wird eine Mischung aus Wasser und Isopropanol im Gewichtsverhältnis 40 : 60 eingesetzt. Der erhaltene Filterkuchen wird mit 100 Gew.-Teilen einer frischen Mischung aus Wasser und Isopropanol im Gewichtsverhältnis 40 : 60 gewaschen.

Das behandelte Hydrogel besitzt einen Restmonomerengehalt von 574 ppm, was einem Auswaschgrad für die Monomeren von 93% entspricht.

## Beispiel 8

Bei einer Wiederholung des Beispiels 5 wird eine Mischung aus Wasser und Isopropanol im Gewichtsverhältnis 40 : 60 eingesetzt. Der erhaltene Filterkuchen wird mit 100 Gew.-Teilen einer frischen Mischung aus Wasser und Isopropanol gewaschen. Dann wird der erhaltene Filterkuchen in dem Rührgefäß mit 200 Gew.-Teilen einer frischen Mischung aus Wasser und Isopropanol 3 min lang verrührt und dann auf einer Filternutsche unter vermindertem Druck abfiltriert und mit 100 Gew.-Teilen einer frischen Mischung aus Wasser und Isopropanol gewaschen. Die zum Einsatz gelangenden Mischungen aus Wasser und Isopropanol haben dabei jeweils das Gewichtsverhältnis Wasser : Isopropanol = 40 : 60.

Das behandelte Hydrogel besitzt einen Gehalt von 250 ppm Acrylsäure, was einem Auswaschgrad für die Monomeren von ca. 97% entspricht.

## Beispiel 9

Bei einer Wiederholung des Beispiels 5 wird eine Mischung aus Wasser und Isopropanol im Gewichtsverhältnis 60 : 40 eingesetzt. In dieser Mischung quillt das Hydrogel, wodurch die Phasentrennung und die Filtration erschwert sind.

## Beispiel 10

Bei einer Wiederholung des Beispiels 5 wird der dabei erhaltene Filterkuchen mit 100 Gew.-Teilen einer frischen Mischung aus Wasser und Isopropanol im Gewichtsverhältnis 50 : 50 gewaschen. Dann wird die Gesamtbehandlung wiederholt, d.h. der Filterkuchen mit frischem Wasser/Isopropanol-Gemisch in dem Rührgefäß intensiv durchmischt, abfiltriert und der Filterkuchen mit frischem Wasser/Isopropanol-Gemisch gewaschen. Die zum Einsatz gelangenden Mischungen aus Wasser und Isopropanol haben dabei jeweils das Gewichtsverhältnis Wasser : Isopropanol = 50 : 50.

Das so behandelte Hydrogel besitzt einen Restmonomerengehalt, der unter der Nachweisgrenze von etwa 20 ppm liegt, was einem Auswaschgrad für die Monomeren von mindestens 99,75% entspricht.

## Beispiel 11

Bei einer Wiederholung des Beispiels 5 wird der dabei erhaltene Filterkuchen dreimal mit je 100 Gew.-Teilen einer frischen Mischung aus Wasser/Isopropanol im Gewichtsverhältnis 50 : 50 gewaschen.

Das behandelte Hydrogel besitzt einen Restmonomerengehalt von 246 ppm, was einem Auswaschgrad für die Monomeren von 97% entspricht.

## Beispiel 12

100 Gew.-Teile des Hydrogels des Beispiels 1 mit einem Restmonomerengehalt von 8.200 ppm werden auf eine Teilchengröße von ca. 1 bis 5 mm zerkleinert und auf eine Vakuumnutsche gegeben und einmal mit 200 Gew.-Teilen sowie anschließend dreimal mit je 100 Gew.-Teilen einer 50 gew.-% igen wäßrigen Isopropanollösung (Gewichtsverhältnis Wasser : Isopropanol = 50 : 50) gewaschen.

Das behandelte Hydrogel besitzt einen Restmonomerengehalt von 490 ppm, was einem Auswaschgrad für die Monomeren von 94% entspricht.

## Beispiel 13

100 Gew.-Teile des Hydrogels des Beispiels 1 mit einem Restmonomerengehalt von 8.200 ppm werden auf eine Teilchengröße von 1 bis 12 mm zerkleinert in einem Kessel mit 500 Gew.-Teilen einer 50% igen wäßrigen Isopropanollösung (Gewichtsverhältnis Wasser : Isopropanol = 50 : 50) 10 min lang verrührt und anschließend auf ein kontinuierlich betriebenes Vakuumbandfilter gepumpt. Auf dem Vakuumbandfilter wird das Hydrogel dreistufig im Gegenstrom mit 50% igem Isopropanol gewaschen.

In dem so gereinigten Hydrogel kann keine freie Acrylsäure als Restmonomer mehr nachgewiesen werden. Der Reinigungseffekt ist bereits nach der ersten Waschstufe vollständig. Der Gehalt an extrahierbaren Oligomeren nimmt von 14 Gew.% auf unter 4 Gew.% ab.

## Beispiel 14

Bei einer Wiederholung des Beispiels 13 wird anstelle der drei Waschstufen nur eine Waschstufe angewendet, und in einer Folgestufe wird das lösingsmittelfeuchte Produkt mit Dampf behandelt. Dabei wird das Isopropanol vollständig aus dem Hydrogel entfernt.

Das behandelte Hydrogel besitzt einen Restmonomerengehalt, der unter der Nachweisgrenze liegt, und der an extrahierbaren Oligomeren nahm von 14 Gew.% auf unter 4 Gew.% ab.

## Beispiel 15

100 Gew.-Teile des Hydrogels des Beispiels 2 mit einem Restmonomerengehalt von 9.000 ppm (= 0,9 Gew.%) werden auf eine Teilchengröße von 1 bis 5 mm zerkleinert. 100 Gew.-Teile des zerkleinerten Hydrogels werden in einem Rührgefäß 3 min lang bei Raumtemperatur mit 200 Gew.-Teilen einer Mischung aus Wasser und Isopropanol im Gewichtsverhältnis 60 : 40 intensiv durch Rühren vermischt. Anschließend wird auf einer Filternutsche unter vermindertem Druck filtriert. Das hydrogel läßt sich gut filtrieren. Der erhaltene Filterkuchen wird mit 100 Gew.-Teilen frischer Wasser/Isopropanol-Mischung im Gewichtsverhältnis 60 : 40 ausgewaschen.

Das Beispiel wird zweimal wiederht.

Das behandelte Hydrogel besitzt einen Restmonomerengehalt von 72 ppm, was einem Auswaschgrad für die Monomeren von 99,2% entspricht.

## Beispiel 16 (Vergleichsbeispiel) :

Bei einer Wiederholung des Beispiels 15 wird eine Mischung aus Wasser und Isopropanol im Gewichtsverhältnis 66²/3 : 33¹/3 eingesetzt. Diese Mischung quillt das Hydrogel an, so daß die Filtration erschwert ist.

## Ansprüche

1. Verfahren zur Herstellung eines weitgehend monomerenund oligomerenfreien Hydrogels auf der Basis von Polyacrylsäure, dadurch gekennzeichnet, daß das Hydrogel auf der Basis von Polyacrylsäure mit einem einphasigen Gemisch aus Wasser und Isopropanol in Kontakt gebracht und dabei das Gewichtsverhältnis zwischen Wasser und Isopropanol im Bereich (40 bis 65) : (60 bis 35) so gewählt wird, daß das behandelte Hydrogel weder schrumpft noch quillt und danach das Gemisch aus Wasser und Isopropanol von dem Hydrogel abgetrennt wird.

2. Verfahren nach Anspruch 1, dadurch gekennzeichnet, daß das Gemisch aus Wasser und Isopropanol im Gegenstrom mit dem Hydrogel in Kontakt gebracht wird.

3. Verfahren nach Anspruch 1 und/oder 2, dadurch gekennzeichnet, daß das Hydrogel nach dem Abtrennen des Gemisches aus Wasser und Isopropanol gedampft und/oder getrocknet wird.

4. Verfahren nach einem oder mehreren der Ansprüche 1 bis 3, dadurch gekennzeichnet, daß das Hydrogel mit dem Gemisch aus Wasser und Isopropanol im Gewichtsverhältnis 1 : (0,5 bis 10), vorzugsweise 1 : (0,5 bis 5), ganz besonders bevorzugt 1 : (1 bis 3), in Kontakt gebracht wird.

## Claims

1. Process for the preparation of a hydrogel based on polyacrylic acid, which hydrogel il largely free from monomers and oligomers, characterized in that the hydrogel based on polyacrylic acid is brought into contact with a single-phase mixture of water and isopropanol, the weight ratio between water and isopropanol being selected in the range of (40 to 65) : (60 to 35) such that the treated hydrogel neither shrinks nor swells, and that the mixture of water and isopropanol is thin separated off from the hydrogel.

2. Process according to Claim 1, characterized in that the mixture of water and isopropanol is brought into contact in countercurrent with the hydrogel.

3. Process acccording to 1 and/or 2, characterized in that the hydrogel is steamed and/or dried after the mixture of water and isopropanol has been removed.

4. Process according to one or more of claims 1 to 3, characterized in that the hydrogel is brought into contact with the mixture of water and isopropanol in a weight ratio of 1 : (0.5 to 10), preferably 1 : (0.5 to 5) and especially preferably 1 : (1 to 3).

## Revendications

1. Procédé pour préparer un hydrogel à base de poly-(acide acrylique) pratiquement dépourvu de monomères et d'oligomères, procédé caractérisé en ce qu'on met l'hydrogel à base de poly-(acide acrylique) en contact avec un mélange à une seule phase constitué d'eau et d'isopropanol et on règle alors le rapport pondéral entre l'eau et l'isopropanol dans l'intervalle (40 à 65) : (60 à 35) de telle façon que l'hydrogel traité ne subisse ni retrait ni gonflement, puis on sépare de l'hydrogel le mélange constitué d'eau et d'isopropanol.

2. Procédé selon la revendication 1 caractérisé en ce que le mélange d'eau et d'isopropanol est mis en contact avec l'hydrogel à contre-courant.

3. Procédé selon l'une des revendications 1 et 2, caractérisé en ce que l'hydrogel, après que le mélange d'eau et d'isopropanol a été séparé, est traité par la vapeur et/ou est séché.

4. Procédé selon l'une quelconque des revendications 1 à 3, caractérisé en ce que l'hydrogel est mis en contact avec le mélange d'eau et d'isopropanol dans un rapport pondéral de 1 : (0,5 à 10), de préférence de 1 : (0,5 à 5) ou, mieux encore, de 1 : (1 à 3).